# EUROPEAN PATENT APPLICATION

(11) **EP 2 309 227 A2**
(43) Date of publication of application: **13.04.2011**
(21) Application number: 10466004.8
(22) Date of filing: 20.01.2010
(51) Int. Cl.: G01C 21/34

(54) **Street navigation system for pedestrians**

(30) Priority: 06.10.2009 CZ 200921765 U
(71) Applicant: Centrum Dopravniho Vyzkumu, 63600 Brno (CZ)
(72) Inventor: Drápela, Emil, 61200 Brno (CZ)
(74) Representative: Kania, Frantisek

(57) **Abstract**

A street navigation system for pedestrians comprising a control unit (1) comprising memory (2) in which data regarding lengths of crosswalks and their interrelation as well as lengths of paths between respective crosswalks in the monitored area are stored, the first input of the control unit (1) being connected to a circuit (8) for controlling the light signals in the location and thus gaining the data regarding the times of changes of signal lights, the second inputs of the control unit (1) being connected to local terminals (3) for entering inquiries regarding the optimal path across the crosswalk or a system of crosswalks and the outputs of the control unit (1) being connected to displays (4) arranged at local terminals (3) to display navigation instructions.

## Description

### Field of the invention

The invention relates to a street navigation system for pedestrians.

### Background of the invention

Present street navigation systems usually consist of boards provided with arrows and data regarding possible destinations of interest of a pedestrian located in the direction of the arrow. More complex traffic intersections have such system usually complemented with traffic lights, which alternately permit and forbid the crossing to the pedestrians.

A drawback of the system consists in the fact that any pedestrian not knowing well such a complex intersection may be often disorientated and experience mental discomfort, which often leads him to cross at red light or diagonally.

Especially, a pedestrian often does not know, in which direction and in what time he will have the green light for crossing. It may also happen that some intersections do not have any crosswalks in those places, where a pedestrian would expect them, and if the pedestrian arrives at a corner of an intersection from where he cannot go on using another zebra crossing, he often opts for a dangerous route outside a crosswalk, which may result in a serious accident.

### Summary of the invention

The above drawbacks of the state of the art are eliminated to a great extent by the street navigation system for pedestrians according to the invention the substance of which is that the navigation system comprises a control unit equipped with memory, in which all the data concerning the length of the crosswalks and their sequence and the length of the routes between the individual crosswalks in the monitored area are stored. The first input of the control unit is connected to a circuit controlling the signal lights in the given location to obtain data about the times of changes of traffic light signals. The second inputs of the control unit are connected to local terminals for entering inquiries regarding the optimal route across the crosswalk or a system of crosswalks and the outputs of the control unit are connected to displays arranged at local terminals to present the navigating information.

The local terminals are preferably fitted with a keyboard or a touch sensitive screen for entering inquiries.

In a preferred embodiment of the invention the control unit is provided with a software to display the time period till the green signal is shown to the pedestrian.

In yet another preferred embodiment of the invention the control unit is provided with a software for designing optimal and/or variant routes and for calculating the time of walking from the point at which the terminal for entering inquiries is located to a point selected by the pedestrian on the local terminal and for displaying the route / routes on the screen of the local terminal.

In yet another preferred embodiment of the invention the control unit is provided with a software for calculating the time of walking from the point at which the terminal for entering inquiries is located to a point selected by the pedestrian on the local terminal, the calculating being executed according to a loaded walking speed.

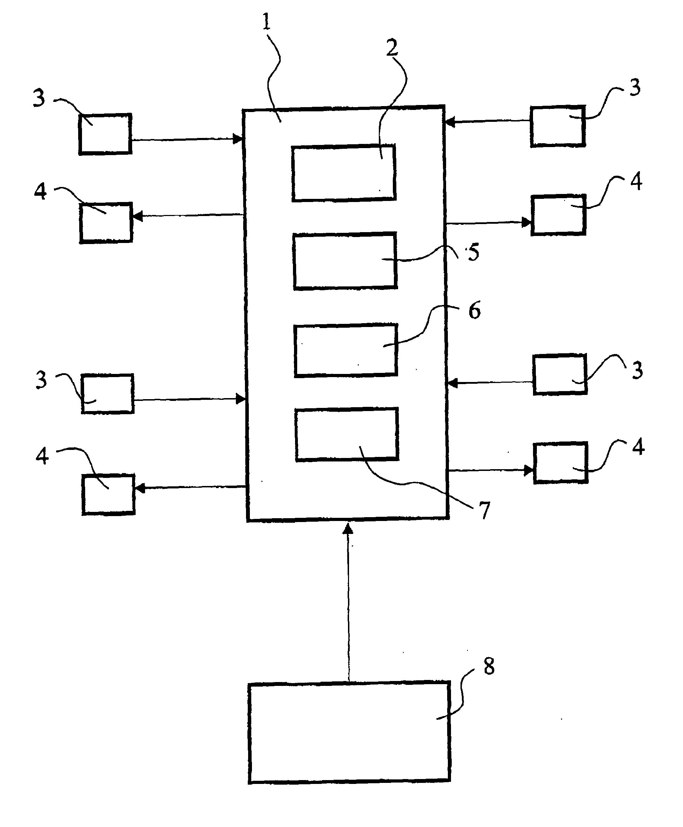

### Brief description of the drawing

The invention will be described in more detail according to the enclosed drawing showing a preferred embodiment of the street navigation system for pedestrians.

### Preferred embodiments of the invention

The figure schematically illustrates an exemplary embodiment of the street navigation system for pedestrians comprising a control unit **1** provided with a memory **2**, in which the data covering the length of crosswalks and their interrelation as well as the length of routes between the individual crosswalks are stored. The first input of the control unit **1** is connected to a circuit **8** controlling the signal lights in the respective location to obtain data regarding the times of changes of the traffic light signal. The second inputs of the control unit **1** are connected with local terminals **3** for entering inquiries regarding optimal routes along the crosswalk or a system of crosswalks. The outputs of the control unit **1** are connected to the displays **4** arranged at local terminals **3.** The control unit **1** is also provided with a software **5** for displaying the time period to pass till the green light will be shown to the pedestrian at the crosswalk, and with another software **6** for suggesting the optimal and/or optional route and for calculating the time of walking from the point at which a respective local terminal **3** for entering inquiries is located to the point selected by the pedestrian on said local terminal **3,** which presents this route on display **4** of the local terminal **3** and finally with software **7** to recalculate the time necessary for walking from the point at which the terminal **3** for entering inquiries is located to the point selected by the pedestrian on the local terminal **3** according to the speed of walking.

In practice, the street navigation system for pedestrians operates as follows: On the local terminal **3,** which is most preferably a touch screen, the intersection and its close surroundings as well as the indication of possible important destinations for a pedestrian are displayed. A pedestrian comes to the intersection, touches his required destination on the screen and the control unit **1** designs the optimum route taking into account when and in which direction the green light appears, what are the distances of the respective routes and optionally the pedestrian may select his walking speed. The path will be displayed on display **4** drawn into the intersection and complemented with an indication of the time necessary to reach the destination at the given walking speed. The street navigation system for pedestrians makes the situation of a pedestrian easier and contributes to a reduction of his mental discomfort, especially in case of a navigation through several rather complicated intersections or multilane roads or busy squares.

### Industrial use

The street navigation system for pedestrians may be used as a complementary equipment to the signal lights at intersections and pedestrian crosswalks.

## Claims

1. A street navigation system for pedestrians **characterised in that** the system comprises a control unit (1) with a memory (2) in which data regarding lengths of crosswalks and their interrelation as well as lengths of paths between respective crosswalks in the monitored area are stored, the first input of the control unit (1) being connected to a circuit (8) for controlling the light signals in the given location to gain data regarding the times of changes of the signal lights, the second inputs of the control unit (1) being connected to local terminals (3) for entering inquiries regarding the optimal path across a crosswalk or a system of crosswalks and the outputs of the control unit (1) being connected to displays (4) for displaying navigation instructions, the displays being arranged at the local terminals (3).

2. The street navigation system for pedestrians according to claim 1, **characterised in that** the local terminals (3) are provided with a keyboard or a touch screen for entering the inquiries.

3. The street navigation system for pedestrians according to claim 1, **characterised in that** the control unit (1) comprises software (5) to display the period of time after the expiry of which the green light will be shown to a pedestrian at the crosswalk.

4. The street navigation system for pedestrians according to claim 1, **characterised in that** the control unit (1) comprises software (6) for designing the optimum and/or variant route and for calculating the period of time of walking from the point at which the local terminal (3) for entering inquiries is located to the location selected by the pedestrian on the local terminal (3) for entering inquiries and for displaying the route on the screen (4) of the local terminal (3).

5. The street navigation system for pedestrians according to claim 4, **characterised in that** the control unit (1) comprises a software (7) for recalculating the period of time of walking from the point at which the local terminal (3) for entering inquiries is located to the location selected by the pedestrian on the local terminal (3) taking into account an entered speed of walking.
